# EUROPEAN PATENT APPLICATION

(11) **EP 1 555 065 A1**
(43) Date of publication of application: **20.07.2005**
(21) Application number: 03797722.0
(22) Date of filing: 22.09.2003
(51) Int. Cl.: B01J 35/02

(54) **PHOTOCATALYST MATERIAL AND PROCESS FOR PRODUCING THE SAME**

(30) Priority: 20.09.2002 JP 2002276413
(71) Applicant: Andes Electric Co., Ltd., Hachinohe-shi, Aomori 039-2292 (JP)
(72) Inventor: NAKAMURA, Yuko ANDES ELECTRIC CO., LTD., Hachinohe-shi, Aomori 039-2292 (JP); KUDO, Takeshi ANDES ELECTRIC CO., LTD., Hachinohe-shi,Aomori 039-2292 (JP); RUIKE, Azuma ANDES ELECTRIC CO., LTD., Hachinohe-shi, i, Aomori 039-2292 (JP); KAWANAMI, Fumie ANDES ELECTRIC CO., LTD., Hachinohe-shi, Aomori 039-2292 (JP); NASHIROZAWA, Norio ANDES ELECTRIC CO., LTD., Hachinohe-shi, Aomori 039-2292 (JP); IWASAKI, Yuji ANDES ELECTRIC CO., LTD., Hachinohe-shi, Aomori 039-2292 (JP); KUZUHORI, Ken ANDES ELECTRIC CO., LTD., Hachinohe-shi, Aomori 039-2292 (JP); TEGURAMORI, Satoshi ANDES ELECTRIC CO., LTD., Hachinohe-shi, Aomori 039-2292 (JP)
(74) Representative: Jenkins, Peter David
(86) International application number: PCT/JP2003/012058
(87) International publication number: WO 2004/026471

(57) **Abstract**

A process for producing a photocatalyst material, the photocatalyst material exhibiting highly active photocatalytic action and capable of reducing special odor generated at the time of ultraviolet irradiation. This process comprises the raw photocatalyst material preparation step (P1) of obtaining a photocatalyst material (raw photocatalyst material) being in the state of not bearing any base metal on its surface and the base metal superimposition step (P3) of causing the raw photocatalyst material obtained in the step P1 to bear base metal fine particles on its surface to thereby obtain the photocatalyst material bearing a base metal. The base metal superimposition step P3 comprises the solution treatment step (P31) of dipping the raw photocatalyst material in a base metal compound solution according to photoprecipitation, the ultraviolet irradiation step (P32) of irradiating the base metal bearing photocatalyst material obtained in the step P31 with ultraviolet light and the drying step (P33) of drying the photocatalyst material resulting from the step P32.

## Description

### Technical Field

The present invention relates to a photocatalyst material and a production method thereof, and particularly, the present invention relates to an oxide photocatalyst material that can exert a high photocatalytic activity at low costs, and can reduce characteristic odor produced during ultraviolet radiation, and to a production method thereof.

### Background Art

An oxide photocatalyst represented by titanium oxide generates electrons in a conduction band and positive holes in a valence band by photoexcitation, when it is irradiated with light at a wavelength of energy not less than its band gap; and decomposes organic matter or nitrogen oxides, which come into contact with the photocatalyst, into water or carbon dioxide gas by the strong reduction power or the strong oxidative power, and has anti-fouling, deodorization, anti-bacterial functions or the like. Although various environmental purification methods or devices utilizing such functions have been provided, it is required to highly activate the photocatalytic functions of the oxide photocatalyst itself in order to achieve the further high performance and high efficiency of the environmental purification methods. On the other hand, the ease of the handling of the oxide photocatalyst and the incorporation in environmental purification devices is desired, and therefore, it is important to improve both the photocatalytic functions and the ease of handling.

Particularly, in order to solve the above-described problems in powdery oxide photocatalysts, although a large number of techniques for preparing oxide photocatalysts, such as a method for vacuum vapor deposition disclosed in Japanese Patent Laid-OpenNo. 8-266910 and the like, a sputtering method disclosed in Japanese Patent Laid-Open No. 8-309204, and a sol-gel method disclosed in Japanese Patent Laid-Open No. 7-100378, have been proposed, no satisfactory techniques from the aspect of high activation of photocatalytic functions have been obtained.

Techniques for controlling the surface state of a photocatalyst are disclosed in Japanese Patent Laid-Open No. 9-57912 and the like. Although these are techniques for improving photocatalytic functions by forming a porous silicon oxide film, or by providing irregularities on the surface of a titanium oxide film or a glass substrate using fine processing to widen the area of the surface where the photocatalyst is exposed, or the like, significant improvement has not necessarily been achieved. There have also been problems in the aspects of costs, such as the processing of the substrate, the processing of the film, and the insertion of the underlying layer.

As a technique for controlling crystals that constitute the surface layer of a photocatalyst body, although Japanese Patent Laid-Open No. 2000-288403 discloses that the surface area where a photocatalyst is exposed is widened and the photocatalytic function is improved by making the shape of crystal grains elliptical or semielliptic, the significant improvement of functions is not necessarily observed, and therefore, an oxide photocatalyst that has the photocatalytic function of higher activity and excels in convenience of handling is demanded.

Under such situations, with a view to making an oxide photocatalyst more active through the control of crystal forms, the present inventors conducted repeated studies for the preparation of an oxide photocatalyst using various methods, such as a chemical vapor deposition method (CVD method) and a physical vapor deposition method (PVD method), and a sol-gel method using an organic metal compound or an inorganic metal compound. As a result, the present inventors found a method wherein a crystal nucleus prepared using various methods, such as a CVD method or a PVD method is put in a sol solution containing an organic metal compound or an inorganic metal compound, or the sol solution if applied to the crystal nucleus, cured and heat-treated to grow the crystals of titanium oxide from the crystal nucleus. Thus, the present inventors uncovered that photocatalytic functions of high activity were obtained from crystals having a columnar hollow structure, wherein the crystal form of titanium oxide crystals grown from the crystal nucleus, and the crystal has a hollow structure (hereafter also referred to as columnar hollow crystal). On the basis of the findings, a novel photocatalyst material was invented and disclosed (Reference 1: Japanese Patent Laid-Open No. 2002-253975, Reference 2: Japanese Patent Laid-Open No. 2002-253964). The photocatalyst material formed of titanium oxide crystals having the columnar hollow structure is composed mainly of a base portion to be fixed on the surface of a photocatalyst material supporting body, and a columnar photocatalyst crystalline body, which is a hollow columnar structure extending from the base portion, and for example; and has a structure wherein titanium oxide crystals of a columnar hollow structure are grown from the base portions of crystal nuclei or the like, supported on the photocatalyst material supporting body, such as various substrates of glass, ceramics, and fibers having a network structure (references 1 and 2). Here, a columnar crystal is the generic term including all of crystal forms such as prism and cylinder, branched dendrite crystal forms, and the form fused together when a plurality of columnar crystals are grown.

Since the obtained photocatalyst material is fixed on the substrate, which is the supporting body, theproblemof scattering as in powdery photocatalysts can be solved. The time required for reducing the concentration of acetaldehyde gas of 20 ppm to 1 ppm or less was about 50% compared to a powdery photocatalyst, and the rate of decomposing acetaldehyde gas became about twice, and thus, the photocatalyst having an extremely active that is very effective for the practical application to air-cleaning systems and the like could be obtained.

### Disclosure of the Invention

However, a new problem has been actualized only after photocatalyst materials having high practical usefulness exhibiting extremely high activity unparalleled in the past. This is the occurrence of some characteristic odor from the surface of titanium oxide. Since it was confirmed that the odor is similarly produced from conventional powdery titanium oxide by experiments, the odor is considered to be produced when a certain substance adsorbed on the surface of titanium oxide is oxidized or reduced by the photocatalytic function, and is characteristic in photocatalyst materials. It was also clarified that the odor was always produced when ultraviolet rays were radiated to the titanium oxide photocatalyst, and that the odor was considerably strong immediately after the radiation of ultraviolet rays. On the other hand, in order to improve the performance of an environmental purification device, and to expand the application field thereof, further improvement of the performance of photocatalysts is extremely important.

The problem to be solved by the present invention is to provide an oxide photocatalyst material that has higher decomposition performance and can reduce characteristic odor produced during ultraviolet radiation, and a method for the manufacture thereof. The present inventors studied repeatedly about the above problems, and found that the problems could be solved by a photocatalyst material supporting a metal or a compound thereof leading to the completion of the present invention. Specifically, the invention claimed herein is as follows:
(1) A photocatalyst material supported by a photocatalyst material supporting body for constituting a photocatalyst body, characterized in that the particles of either one of a metal or a metallic compound are supported by said photocatalyst material.
(2) A photocatalyst material supported by a photocatalyst material supporting body for constituting a photocatalyst body, characterized in that the particles of either one of a base metal or a base-metal compound are supported by said photocatalyst material.
(3) A photocatalyst material supported by a photocatalyst material supporting body for constituting a photocatalyst body, characterized in that the particles of both a base metal and a base-metal compound are supported by said photocatalyst material.
(4) The photocatalyst material according to (2) or (3), characterized in that said photocatalyst is titanium oxide, and said base metal or base-metal compound is at least one of Cu, Fe, Ni, Zn, Co, V, Zr, Mn, Sn, Cr, W, Mo, Nb, Ta, or the compounds thereof.
(5) The photocatalyst material according to any one of (2) to (4), characterized in that said photocatalyst material is a photocatalyst material consisting of a base portion to be fixed on the surface of the photocatalyst material supporting body or a base portion fixed on the surface of the photocatalyst material supporting body, and a columnar photocatalyst crystalline body extending from said base portion.
(6) The photocatalyst material according to (5), characterized in that said base portion consists of crystal nuclei or the like, and the inside of said columnar photocatalyst crystalline body has a hollow columnar structure.
(7) The photocatalyst material according to (6), characterized in that a structure consisting of fine photocatalyst particles in said photocatalyst crystalline body.
(8) The photocatalyst material according to any one of (2) to (7), characterized in that when acetaldehyde gas is decomposed using said photocatalyst material consisting of a supporting quantity of about 0.1 g supported on the photocatalyst material supporting body having a catalyst supporting area of 75 mm × 75 mm, the time required for reducing the acetaldehyde gas concentration in a glass container of a volume of 20 liter is 5 minutes or more and 10 minutes or less.
(9) A photocatalyst body comprising a photocatalyst material supporting body, and the photocatalyst material supported on the photocatalyst material supporting body according to any of (2) to (8).
(10) A method for producing a photocatalyst material comprising a raw photocatalyst material preparing step for obtaining a photocatalyst material that supports no base metals or no compounds thereof (hereafter referred to as "raw photocatalyst material"), and a base-metal supporting step for supporting the fine particles of a base metal or the compound thereof on the surface of the obtained raw photocatalyst material;
   characterized in that said base-metal supporting step comprises a solution treatment step for implementing treatment, such as immersing and applying, using a solution of a base-metal compound to the raw photocatalyst material; and a ultraviolet treatment step for reducing and depositing the base metal or the compound thereof on the surface of the raw photocatalyst material by radiating ultraviolet rays on the photocatalyst materialtreated in said solution treatment step.
(11) A method for producing a photocatalyst material comprising a raw photocatalyst material preparing step for obtaining a photocatalyst material that supports no base metals or no compounds thereof, and a base-metal supporting step for supporting the fine particles of a base metal or the compound thereof on the surface of the obtained rawphotocatalyst material;
   characterized in that said base-metal supporting step comprises a solution treatment step for implementing treatment, such as immersing and applying, using a solution of a base-metal compound to the raw photocatalyst material; a drying step for drying the photocatalyst material treated in said solution treatment step; and a heat treatment step for heat-treating the photocatalyst material treated in said drying step.
(12) The method for producing a photocatalyst material according to (11), characterized in further comprising, after said heat treatment step, a reduction step for reducing fine base metal particles in an oxidized state supported on the surface of said photocatalyst material.
(13) A method for producing a photocatalyst material comprising a raw photocatalyst material preparing step for obtaining a photocatalyst material that supports no base metals or no compounds thereof, and a base-metal supporting step for supporting the fine particles of a base metal or the compound thereof on the surface of the obtained rawphotocatalyst material;
   characterized in that said base-metal supporting step is a chemical vapor deposition step for supporting the fine particles of a base metal or a compound thereof on the surface of the raw photocatalyst material by a thermal CVD method, a plasma CVD method, or other chemical vapor deposition methods.
(14) A method for producing a photocatalyst material comprising a raw photocatalyst material preparing step for obtaining a photocatalyst material that supports no base metals or no compounds thereof, and a base-metal supporting step for supporting the fine particles of a base metal or the compound thereof on the surface of the obtained rawphotocatalyst material;
   characterized in that said base-metal supporting step is a spray pyrolysis step for pyrolyzing a solution of a base metal compound by spraying it on the surface of a heated raw photocatalyst material, and thereby the base metal or the compound thereof is supported on the surface of the raw photocatalyst material.
(15) A method for producing a photocatalyst material comprising a raw photocatalyst material preparing step for obtaining a photocatalyst material that supports no base metals or no compounds thereof, and a base-metal supporting step for supporting the fine particles of a base metal or the compound thereof on the surface of the obtained rawphotocatalyst material;
   characterized in that said base-metal supporting step comprises a solution treatment step for implementing treatment, such as immersing and applying, using a solution of a base-metal compound to the raw photocatalyst material; and a reducing agent adding step for depositing a base metal or the compound thereof on the surface of the raw photocatalyst material by adding a reducing agent to the photocatalyst material treated in said solution treatment step.
(16) A method for producing a photocatalyst material comprising a raw photocatalyst material preparing step for obtaining a photocatalyst material that supports no base metals or no compounds thereof, and a base-metal supporting step for supporting the fine particles of a base metal or the compound thereof on the surface of the obtained raw photocatalyst material;
characterized in that said base-metal supporting step is a physical vapor deposition step for supporting the fine particles of a base metal or a compound thereof on the surface of the raw photocatalyst material by a sputtering method, a vacuum vapor deposition method, or other vapor deposition methods.

Specifically, the present invention can significantly improve the decomposing performance at low costs, and can reduce or eliminate the occurrence of characteristic odor when ultraviolet rays are radiated, by supporting the fine particles of a metal or a compound thereof on the surface of a photocatalyst material, particularly a photocatalyst material composed of a titanium oxide photocatalyst crystal having a columnar hollow structure previously proposed by the present inventors; and the metal or the like to be used may be a base metal or a compound thereof, or a precious metal or a compound thereof.

Said titanium oxide photocatalyst crystal is characterized in grown from a crystal nucleus by putting the crystal nucleus in a sol solution of an organic metal compound or an inorganic metal compound, or by applying a sol solution to the crystal nucleus, and curing and heat-treating. Although the titanium oxide crystal having a columnar hollow structure itself has already high activity, the activity can further be improved by making it support the fine particles of a metal or a oxide thereof, and the decomposing efficiency of harmful organic substances, such as acetaldehyde, can be significantly improved to about twice or more compared with the photocatalyst material having a columnar hollow structure, and to about 4 times compared with conventional powdery photocatalyst.

Specifically, one of typical oxide photocatalyst materials according to the present invention is a titanium oxide crystal having a columnar hollow structure grown from a crystal nucleus, and having fine particles of a base metal, such as Cu, or a compound thereof supported on the surface thereof. The supporting is performed by supporting the base metal or the like on a photocatalyst material before supporting a base metal or a compound thereof using a photo-precipitation method, a wet process, a PVD method, a CVD method, or a spray pyrolysis method (SPD method) or the like.

In the present invention, the columnar shape of a photocatalyst crystal includes all of prism, cylindrical, rod-like, and other columnar steric structures; and the columnar crystals include those extending straight in a perpendicular direction, those extending at a slant, those extending with curvature, those extending divergingly as branches, and those wherein a plurality of columnar crystals are grown and fused together in mid-course or the like.

Not only crystal nuclei prepared using a sputtering method, a PVD method, such as a vacuum vapor deposition method, or a CVD method, but single crystals, polycrystalline bodies and other kinds of crystals can be widely used. As a crystal nucleus, what cannot be apparently recognized as a nucleus as seen in ordinary chemical reactions, such as a flaw on a substrate, can also be used as an alternative of the nucleus. The columnar crystal structure is characterized in that one or more columnar crystal is grown on a crystal nucleus, the crystal nucleus and the columnar crystal grown thereon grow in the same orientation; and in a typical structure, the columnar crystal inside has a hollow structure. A photocatalyst having a columnar crystal structure has a higher contacting ef f iciencywith the obj ect to be decomposed than conventional photocatalysts having other crystal forms, and the decomposition performance is dramatically improved.

Aside from the present invention, the present inventors proposed a method for improving the decomposition performance over columnar hollow crystals without removing outer-wall portions by a technique wherein a part of the outer-wall portions of a columnar hollow crystal is removed using a method, such as dry etching and wet etching to expose the interior having a hollow structure including a structure composed of fine photocatalyst particles to the exterior, in an unpublished patent application (Japanese Patent Application No. 2001-392804). By using the combination of this method and the method for preparing a columnar hollow crystalline photocatalyst material supporting fine particles of a precious metal of the present invention, the decomposition performance of the photocatalyst material can further be improved by the synergic effect.

In this case, as a method for exposing the hollow interior structure of the columnar hollow crystalline to exterior, a dry etching method, a wet etching method, and a mechanical method are effective. The dry etching methods include physical etching methods and chemical etching methods. The physical etching methods include an ion etching method, a plasma etching method and the like. The chemical etching methods include a gas etching method. The wet etching method is a method that uses an etching solution containing a strong inorganic acid, a strong oxidant, a fluoride or the like as the fundamental component. The mechanical method is a method for exposing the hollow interior structure onto the surface by polishing the columnar hollow crystal. By these methods, a part of the exterior-wall portion of the columnar hollow crystal can be removed, the hollow interior structure can be exposed to exterior, and photocatalytic functions of high activity can be obtained.

In the process for preparing a columnar hollow titanium oxide crystals, the thermal conduction rate, which greatly contributes to crystal formation elevates by heat treatment at 15°C/min to 105°C/min, or at 20°C/min to 100°C/min, and the hollow interior structure of the columnar hollow crystal is exposed by lowering the crystalline density of the crystals composing the exterior-wall portion of the columnar hollow crystal, and thereby, the high activation of photocatalytic functions can be achieved.

The "base-metal supporting process" in the present invention means a process for supporting fine particles of a base metal or a compound thereof on a raw photocatalyst material.

### Brief Description of the Drawings

Figure 1 is a conceptual diagram showing the appearance of the photocatalyst material of the present invention;
Figure 2 is a conceptual diagram showing the appearance of the photocatalyst material formed of titanium oxide crystals having a columnar hollow structure of the present invention;
Figure 3 is a flow diagram showing the constitution of the method for producing the photocatalyst material of the present invention using a photo-precipitation method;
Figure 4 is a flow diagram showing the process for producing the raw photocatalyst material having a columnar hollow structure of the present invention as an example of the constitution of the process for preparing the raw photocatalyst material shown in Figure 3 and the like;
Figure 5 is a flow diagram showing the constitution of the method for producing the photocatalyst material of the present invention using a wet process.
Figure 6 is a flow diagram showing the constitution of the method for producing the photocatalyst material of the present invention using a CVD method;
Figure 7 is a flow diagram showing the constitution of the method for producing the photocatalyst material of the present invention using a SPD method;
Figure 8 is a flow diagram showing the constitution of the method for producing the photocatalyst material of the present invention using a reducing agent; and
Figure 9 is a flow diagram showing the constitution of the method for producing the photocatalyst material of the present invention using a PVD method.
   Reference numerals and characters used in each figure denote the followings:
   1 ... Photocatalyst material supporting body, 2 ... Base portion (crystal nucleus), 3 ... Photocatalyst crystalline body (titanium oxide crystal having a columnar hollow structure), 4 ... Fine particles of a metal or a metal compound, 5 ... Fine particles of a base metal or a base-metal compound, 8, 10 ... Photocatalyst material, 18, 20 ... Photocatalyst body, P1 ... Step for preparing raw photocatalyst material, P3 ... Step for supporting base metal (photo-precipitation method), P31 ... Solution treatment step, P32 ... Ultraviolet radiating step, P33 ... Drying step, P5 ... Base metal supporting step (wet process), P51 ... Solution treatment step, P52 ... Drying step, P53 ... Heat treatment step, P54 ... Reducing step, P6 ... Step for supporting base metal (CVD method), P7 ... Step for supporting base metal (SPD method), P8 ... Step for supporting base metal (using reducing agent), P81 ... Solution treatment step, P82 ... Step for adding reducing agent, P83 ... Drying step, P9 ... Step for supporting base metal (PVD method), 41 ... Gelating step, 42 ... Curing step, 43 ... Heat treatment step, S1 ... Crystal nucleus, S2 ... Sol solution, M3 ... Prototype of photocatalyst material, M4 ... Cured prototype, and M5 ... Raw photocatalyst material

### Best Mode for Carrying Out the Invention

The present invention will be described below in further details referring to the drawings.

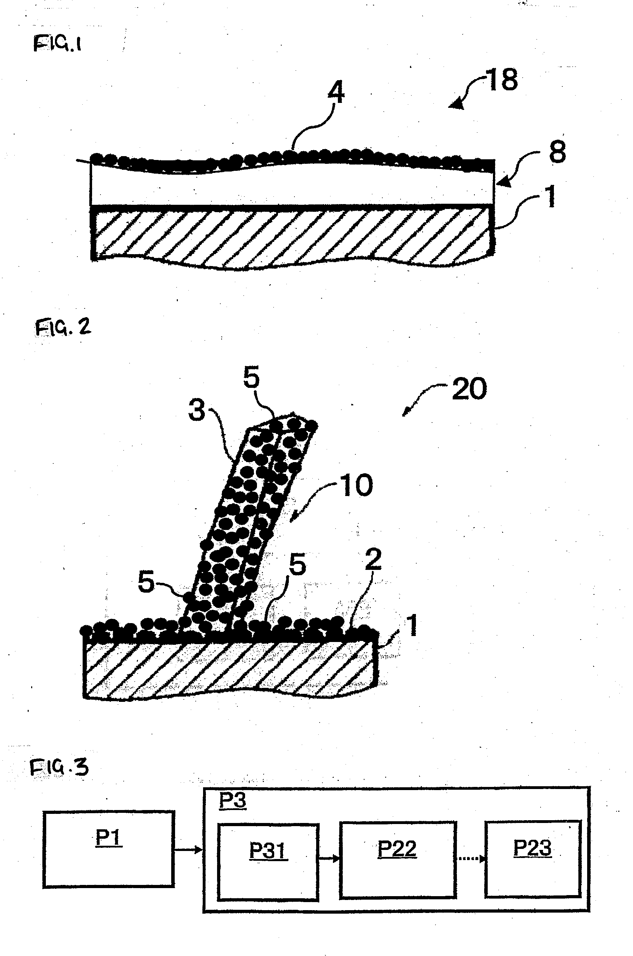

Figure 1 is a conceptual diagram showing the appearance of the photocatalyst material of the present invention. In the diagram, the photocatalyst material 8 is a photocatalyst material 8 supported on a photocatalyst material supporting body 1, such as various substrates, for example, glass, metals, ceramics, or fibers having a network structure, for composing a photocatalyst body 18, and fine particles of at least one of a metal or a metal compound are supported on the photocatalyst material 8. Figure 1 is a conceptual diagram, and the size of the fine particles 4 of a metal or a compound thereof is exaggerated compared with the photocatalyst material 8, and the distribution state thereof is also conceptually shown.

Referring to the diagram, the fine particles 4 include (a) the case of fine particles of a specific metal alone, (b) the case of fine particles of a specific compound, such as an oxide of a metal, alone, and (c) the case of fine particles of a specific single metal and a specific compound, such as an oxide of the metal; and the case where different kinds of metals and different kinds of metal compounds are mixed in any mixed states is also included. Therefore, as an example of the case (c), the case where both fine particles of Pt and PtCl₂, which is the chloride thereof are mixed and supported is also included as an embodiment of the present invention.

Referring to the diagram, the photocatalyst material 8 of the present invention is supported on a photocatalyst material supporting body 1 to compose a photocatalyst body 18, and can be a constitution wherein fine particles 4 of at least one of a base metal or a base metal compound are supported on the photocatalyst material 8. Therefore, as fine particles 4, for example, only Cu can be supported, only CuO, which is the oxide thereof, can be supported, or the mixture of these can also be supported.

Referring to the diagram, the photocatalyst material 8 of the present invention is supported on a photocatalyst material supporting body 1 to compose a photocatalyst body 18, and can be a constitution wherein a mixture of fine particles 4 of both a base metal and a compound of the base metal. As the photocatalyst, titanium oxide can be used; and as the base metal or the like, at least one of Cu, Fe, Ni, Zn, Co, V, Zr, Mn, Sn, Cr, W, Mo, Nb, Ta, or the compound thereof can be used. Therefore, for example, the constitution wherein the mixture of both Cu and CuO, which is the oxide thereof, is supported can.be used as the fine particles 4. For example, as Ni and V₂O₅, different elemental substances and compounds can be optionally combined and supported.

Each photocatalyst material 8 of the present invention described using Figure 1 can constitute a photocatalyst body 18 of a form easy to handle, by being supported on a photocatalyst material supporting body 1, such as various substrates, for example, glass, metals, ceramics, or fibers having a network structure.

In Figure 1, the photocatalyst material 8 of the present invention is fixed on the surface of a photocatalyst material supporting body 1, and has a state wherein the fine particles 4 of a metal such as Cu, or the like are supported. By using the photocatalyst material 8 thus constituted to support the fine particles 4 of a metal or the like, the occurrence of characteristic odor due to ultraviolet radiation is reduced, or the occurrence of the odor is eliminated, when photo excitation by ultraviolet rays is performed to obtain a photocatalytic effect. Although the effect to reduce the occurrence of odor is effectively observed when a precious metal, such as Pt, is used, the effect can be more significantly functioned by a base metal, such as Cu, or a compound thereof.

When the fine particles 4 of a metal or the like are constituted so that the particle diameters thereof become smaller, the decomposition of harmful organic substances, such as acetaldehyde, is accelerated, and the decomposition performance is improved.

Figure 2 is a conceptual diagram showing the appearance of the photocatalyst material formed of titanium oxide crystals having a columnar hollow structure of the present invention. In the diagram, the photocatalyst material 10 has a major constitution wherein the photocatalyst material 10 is composed of a base portion 2 to be fixed on the surface of the photocatalyst material supporting body 1, or fixed on the surface of the photocatalyst material supporting body 1, and a columnar photocatalyst crystal body 3 extending from the base portion 2; it is supported on a photocatalyst material supporting body 1, such as various substrates, for example, glass, metals, ceramics, or fibers having a network structure to constitute a photocatalyst body 20; and fine particles 5 of at least either one of a base metal or a base-metal compound is supported. Figure 2 is a conceptual diagram, and the size of the fine particles 5 of a base metal or a compound thereof is exaggerated compared with the photocatalyst material 10, and the distribution state thereof is also conceptually shown.

Therefore, as fine particles 5, for example, only Cu can be supported, or only CuO, which is the oxide thereof, can be supported, or the mixture of these can also be supported.

Referring to the diagram, the fine particles 4 of a metal or the like supported on the photocatalyst material 8 of the present invention can be the fine particles of a base metal or a base-metal compound. As the photocatalyst, titanium oxide can be used; and as the base metal or the like, at least one of Cu, Fe, Ni, Zn, Co, V, Zr, Mn, or the compound thereof can be used. Specifically, the photocatalyst material 10 of the present invention has a structure wherein a columnar titanium oxide crystal is grown from the base portion 2 as a photocatalyst material crystal body 3, such as a crystal nucleus supported, for example, on the photocatalyst material supporting body 1; and the precious metal fine particles 5 of Cu or the like are supported on the surfaces of the base portion 2 and the photocatalyst material crystal body 3.

Referring to the diagram, the photocatalyst material 10 can be constituted so that the base portion 2 is composed of a crystal nucleus or the like, the photocatalyst material crystal body 3 has a hollow columnar structure (hereafter also referred to as "columnar hollow structure"), and a structure 6 consisting of photocatalyst particles (not shown) (hereafter also referred to as "crystal grains") are present in the photocatalyst material crystal body 3.

As the crystal nucleus, not only the crystal nucleus prepared using a sputtering method, a PVD method, such as a vacuum vapor deposition method, or a CVD method, but any kinds of single crystals, polycrystalline bodies, powders, ceramics, thermal oxide films of a metal, and anodized films can also be used. Also as the crystal nucleus, what cannot be apparently recognized as a nucleus as seen in ordinary chemical reactions, such as a portion on the substrate but having a different state from the substrate, for example, a flaw on the substrate or the protrusion of foreign matter, can also used as the alternative of the nucleus. The columnar crystal structure is characterized in that one or more columnar crystal is grown on a crystal nucleus, the crystal nucleus and the columnar crystal grown thereon grow in the same orientation; and in a typical structure, inside of the columnar crystal has a hollow structure.

Each photocatalyst material 10 of the present invention described using Figure 2 can constitute a photocatalyst body 20 of aneasy-to-handle form, by being supported on a photocatalyst material supporting body 1, such as various substrates, for example, glass, metals, ceramics, or fibers having a network structure.

In Figure 2, the photocatalyst material 10 of the present invention has the structure wherein the photocatalyst material 10 is fixed on the surface of the photocatalyst material supporting body 1 at the base portion 2, and fine particles 5 of a base metal or the like, such as Cu, are supported on the surfaces of the base portion 2 and the photocatalyst crystal body 3 extending from the base portion 2. Although the surface area of the photocatalyst crystal body 3 is widened by taking a columnar structure, and the photocatalytic functions have already been highly active, the efficiency of decomposing harmful organic substances, such as acetaldehyde, is further elevated by supporting the fine particles 5 of a base metal or the like on the surface thereof, and about two-fold decomposition efficiency can be obtained compared with the case where no fine particles of a base metal or the like are supported.

For example, in the photocatalyst material 10 of the present invention, when acetaldehyde gas is decomposed using the photocatalyst material 10 constituted using a supported quantity of about 0.1 g of photocatalyst supported on a photocatalyst material supporting body having a catalyst supporting area of 75 mm × 75 mm, the time required for reducing the concentration of acetaldehyde gas in a glass container of a volume of 20 L from 20 ppm to 1 ppm or less can be shortened to 10 minutes or less, or to 6 minutes depending to the constitution.

In the photocatalyst material using titanium oxide of a columnar hollow structure according to the present invention, even if no fine particles of a base metal or the like are supported, since a concentration of 1 ppm or less can be achieved in about 15 minutes, which requires about 30 minutes by conventional powdery photocatalyst, the decomposition efficiency under the above conditions is about twice; and a considerable improvement of the decomposition efficiency can be achieved; however, the present invention wherein the fine particles of a base metal or the like exhibits decomposing performance further exceeding this. Specifically, when the photocatalyst material of the present invention is compared with a conventional powdery photocatalyst, the time required for decomposition is shortened to about one-fourth to one-fifth, and about 4 to 5 times decomposition efficiency can be obtained, significantly improving the decomposing performance.

By constituting the fine particles 5 of a base metal or the like so that the particle diameter thereof becomes smaller, the decomposition of harmful organic substances, such as acetaldehyde is accelerated, and the decomposing performance is improved.

The reason why photocatalytic functions are highly activated by supporting the fine particles of a metal or the like on a titanium oxide photocatalyst is that excited electrons are collected and pooled in the conduction band by the absorption of excitation light to the photocatalyst, and simultaneously, positive holes move toward harmful organic substances adsorbed on the surface of the photocatalyst, creating the state wherein the probability of recombination of electron-hole pairs is compellingly reduced. Specifically, by the creation of a charge separation state of electron-hole pairs, the recombination thereof is suppressed, and the photocatalytic reaction by ambient oxygen and positive holes, and the oxidization and decomposition of the harmful organic substances are accelerated, achieving the elevation of the sensitivity of the photocatalytic activity.

Referring to the diagram, since the photocatalyst material 10 is constituted so as to support the fine particles 5 of a metal or the like, when photoexcitation is performed using ultraviolet rays for obtaining the photocatalytic effect, the production of characteristic odor due to the ultraviolet radiation is reduced, or the production of odor is eliminated. Although the effect of reducing the production of odor is effectively recognized even when a precious metal, such as Pt, is used, the effect is more significantly obtained by the use of a base metal, such as Cu, or a compound thereof.

Figure 3 is a flow diagram showing the constitution of the producing method using a photo-precipitation method as one of the methods for producing the photocatalyst material of the present invention. In the diagram, the method for producing a photocatalyst material of the present invention comprises a raw photocatalyst material preparing step P1 for obtaining a photocatalyst material that supports no base metals or the like, and a base-metal supporting step P3 for supporting the fine particles of a base metal or the like on the surface of the obtained photocatalyst material; the base-metal supporting step P3 comprises a solution treatment step P31 for implementing treatment, such as immersing and applying, using a solution of a base-metal compound to the photocatalyst material; and a ultraviolet treatment step P32 for reducing and depositing the base metal or the like on the surface of the raw photocatalyst material by radiating ultraviolet rays on the photocatalyst material treated in the solution treatment step P31.

Referring to the diagram, after the ultraviolet treatment step P32, a drying step P33 for drying the photocatalyst material supporting a base metal or the like by the step P32 can be provided.

In the method for producing a photocatalyst material using a photo-precipitation method of the present invention shown in the diagram, a photocatalyst material in the state wherein a base metal or the like is not yet supported on the surface (raw photocatalyst material) is obtained in the raw photocatalyst material preparing step P1, and then, in the base-metal supporting step P3, the fine particles of a base metal or the like are supported on the surface of the raw photocatalyst material obtained in the step P1. A treatment, such as immersing or applying using a solution of a base-metal compound, is performed to the raw photocatalyst material in the solution treatment step P31 in the base-metal supporting step P3, and then, in the ultraviolet treatment step P32, ultraviolet rays are radiated onto the photocatalyst material treated in the solution treatment step P31, and the base material or the like is reduced, deposited and supported on the surface of the photocatalyst material. Furthermore, in the drying step P33, the photocatalyst material supporting the base material or the like is dried, and the photocatalyst material supporting the fine particles of a base metal or the like of the present invention is produced.

Through the ultraviolet treatment step P32, the fine particles of a base metal or the like supported on the surface of the photocatalyst material in the solution treatment step P31 are reduced, the decomposition efficiency of harmful organic substances can be improved, and the performance of photocatalytic functions can be elevated. In addition, the production of the characteristic odor during ultraviolet radiation can be reduced, or the production thereof can be eliminated.

Figure 4 is a flow diagram showing the process preparing the raw photocatalyst material having a columnar hollow structure as an example of the constitution of the raw photocatalyst preparing step P1 shown in Figure 3. In Figure 4, the process for producing a raw photocatalyst material having a columnar hollow structure is mainly constituted of a gelating step 41, wherein a crystal nucleus S1 to be the base portion of a photocatalyst material is dipped in a sol solution S2 containing an organic metal compound or an inorganic metal compound, or a sol solution S2 containing an organic metal compound or an inorganic metal compound is applied to a crystal nucleus S1 to be the base portion of a photocatalyst material, to obtain the prototype M3 of the photocatalyst material by gelation; a curing step 42 for drying and curing the prototype M3 obtained by the gelating step 41 to obtain a cured prototype M4; and a heat-treatment step 43 for heat-treating the cured prototype M4 to obtain a rawphotocatalyst material M5 having a photocatalyst crystal body of a columnar structure or a columnar hollow structure.

Referring to the diagram, according to the gelating step 41, the crystal nucleus S1 to be the base portion of a photocatalyst material is dipped in a sol solution S2 containing an organic metal compound or an inorganic metal compound, or a sol solution S2 containing an organic metal compound or an inorganic metal compound is applied to a crystal nucleus S1 to be the base portion of a photocatalyst material, to obtain the prototype M3 of the photocatalyst material by gelation; next, according to the curing step 42, the prototype M3 obtained by the gelating step 41 is dried and cured to obtain a cured prototype M4; and according to the heat-treatment step 43, the cured prototype M4 is heat-treated to obtain a raw photocatalyst material M5 having a photocatalyst crystal body of a columnar structure or a columnar hollow structure.

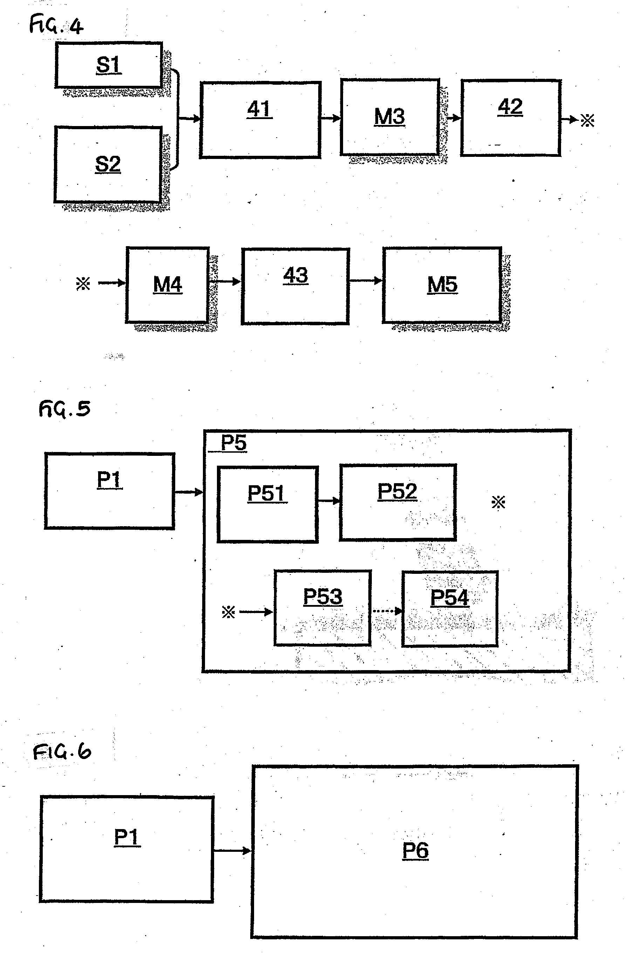

Figure 5 is a flow diagram showing the constitution of the method for producing the photocatalyst material of the present invention using a wet process. Referring to the diagram, the producing method comprises a raw photocatalyst material producing step P1 for obtaining a photocatalyst material supporting no base material or the like; and a base-metal supporting step P5 for supporting the fine particles of a base metal or the like on the surface of the raw photocatalyst material obtained in the step P1. The base-metal supporting step P5 is constituted by a solution treatment step P51 for implementing treatment, such as immersing or applying, using a solution of a base-metal compound to the raw photocatalyst material; a drying step P52 for drying the photocatalyst material treated in the solution treatment step P51; and a heat-treatment step P53 for heat-treating the photocatalyst material treated in the drying step P52.

Referring to the diagram, in the producing method, a reduction step P54 for reducing the fine particles of a base metal in an oxidized state supported on the surface of the photocatalyst material can be provided after the heat-treatment step P53. By using the steps shown in Figure 4 as the raw photocatalyst material producing step P1, a photocatalyst material having a columnar hollow structure can be produced, and can be used as a raw photocatalyst material.

Referring to the diagram, in the method for producing a photocatalyst material using a wet process of the present invention, although a photocatalyst material in the state wherein a base metal or the like has not yet been supported on the surface can be obtained in the raw photocatalyst material producing step P1, and then, the fine particles of a base metal or the like are supported on the surface of the raw photocatalyst material obtained in the step P1 in the base-metal supporting step P5, a treatment using the solution of a base-metal compound, such as immersing or applying, is implemented to the raw photocatalyst material in the solution treatment step P51 in the base-metal supporting step P5, the photocatalyst material treated in the solution treatment step P51 is dried in the drying step P 52, and then, the photocatalyst material treated in the drying step P 52 is heat-treated in the heat-treatment step P53 to produce the photocatalyst material supporting the fine particles of a base metal or the like of the present invention. Specifically, the decomposition efficiency of harmful organic substances can be improved, and the high performance of photocatalytic functions can be achieved. In addition, the production of characteristic odor can be reduced, or a photocatalyst material without the production thereof can be produced.

Referring to the diagram, in this producing method, the fine particles of a base metal in an oxidized state supported on the surface of the photocatalyst material are reduced in the heat-treatment step P53 following the reduction step P54.

Figure 6 is a flow diagram showing the constitution of the method for producing the photocatalyst material of the present invention using a CVD method. Referring to the diagram, this producing method comprises a raw photocatalyst material producing step P1 for obtaining a raw photocatalyst material, and a base-metal supporting step P6 for supporting the fine particles of a base metal or the like on the surface of the raw photocatalyst material obtained in the step P1; and the base-metal supporting step P6 has the constitution to be a chemical vapor deposition step for supporting the fine particles of a base metal or the like on the surface of the raw photocatalyst material using a thermal CVD method, a plasma PVD method or other chemical vapor deposition methods. By using the above-described step shown in Figure 4 as the raw photocatalyst material producing step P1, a photocatalyst material having a columnar hollow structure can be produced, and this can be used as a raw photocatalyst material.

Referring to the diagram, in the method for producing a photocatalyst material of the present invention using a CVD method, although a raw photocatalyst material is obtained in the raw photocatalyst material producing step P1, and in the base-metal supporting step P6, the fine particles of a base metal or the like are supported on the surface of the rawphotocatalyst material obtained in the step P1, by a chemical vapor deposition method, which is the base-metal supporting step P6, the fine particles of a base metal or the like are supported on the surface of the raw photocatalyst material, and a photocatalyst material supporting the fine particles of a base metal or the like of the present invention can be produced.

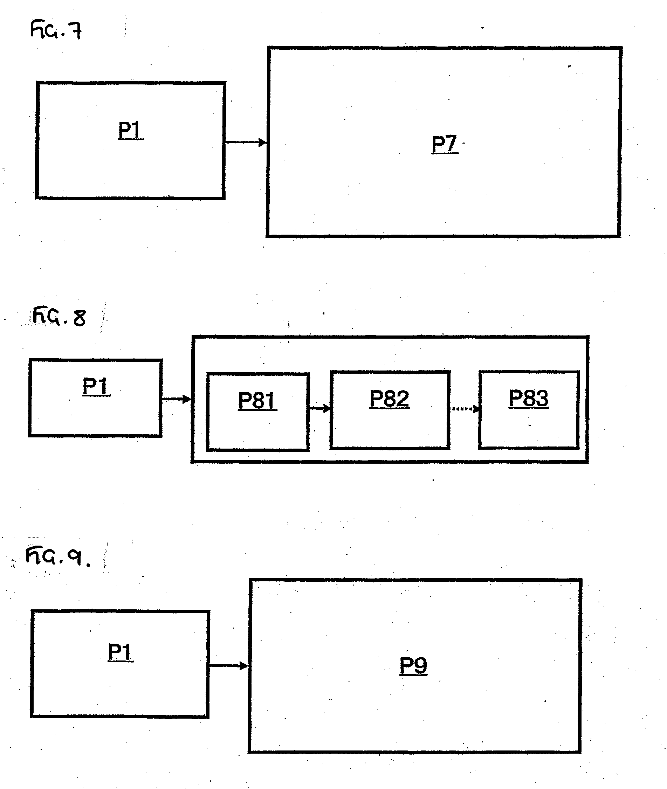

Figure 7 is a flow diagram showing the constitution of the method for producing the photocatalyst material of the present invention using a SPD method. Referring to the diagram, this producing method comprises a raw photocatalyst material producing step P1 for obtaining a raw photocatalyst material, and a base-metal supporting step P7 for supporting the fine particles of a base metal or the like on the surface of the obtained raw photocatalyst material; and the base-metal supporting step P7 has the constitution to be a spray pyrolysis step for spraying a solution of a base-metal compound onto the surface of the heated photocatalyst material, whereby the base metal or the like is supported on the surface of the raw photocatalyst material.

Referring to the diagram, in the method for producing the photocatalyst material of the present inventionusing a SPDmethod, a raw photocatalyst material is obtained in the raw photocatalyst material producing step P1, and in the base-metal supporting step P7, a solution of a base-metal compound is sprayed onto the surface of the heated photocatalyst material, and is thermally decomposed, whereby the base metal or the like is supported on the surface of the raw photocatalyst material, and a photocatalyst material supporting the fine particles of a base metal or the like of the present invention can be produced.

Figure 8 is a flow diagram showing the constitution of the method for producing the photocatalyst material of the present invention using a reducing agent. Referring to the diagram, this producing method comprises a raw photocatalyst material producing step P1 for obtaining a raw photocatalyst material, and a base-metal supporting step P8 for supporting the fine particles of a base metal or the like on the surface of the obtained raw photocatalyst material; and a base-metal supporting step P8 has the constitution to be a solution treatment step P81 for implementing a treatment using the solution of a base-metal compound, such as immersing or applying, to the raw photocatalyst material, and a reducing-agent adding step P82 for depositing a base metal or the like on the surface of a raw photocatalyst material by adding a reducing agent to the photocatalyst material treated in the solution treatment step P81. After the reducing-agent adding step P82, a drying step P83 for drying the photocatalyst material treated in the step P82 can be provided.

Referring to the diagram, in the method for producing a photocatalyst material of the present invention using a reducing agent, a raw photocatalyst material is obtained in the raw photocatalyst material producing step P1, and a treatment using the solution of a base-metal compound, such as immersing or applying, is implemented to the raw photocatalyst material in the solution treatment step P81 in the base-metal supporting step P8, then in the reducing-agent adding step P82, a reducing agent is added to the photocatalyst material treated in the solution treatment step P81 to deposit and support the base metal or the like on the surface of the raw photocatalyst material, and a photocatalyst material supporting a base metal or the like of the present invention is produced. When the drying step P83 is provided, the photocatalyst material treated in the reducing-agent adding step P82 is dried to be a photocatalyst material supporting a base metal or the like of the present invention.

Figure 9 is a flow diagram showing the constitution of the method for preparing the photocatalyst material of the present invention using a PVD method. Referring to the diagram, this producing method comprises a raw photocatalyst material producing step P1 for obtaining a raw photocatalyst material, and a base-metal supporting step P9 for supporting the fine particles of a base metal or the like on the surface of the obtained raw photocatalyst material; and the base-metal supporting step P9 has the constitution to be a physical vapor deposition step for supporting the fine particles of a base metal or the like on the surface of the raw photocatalyst material by a sputtering method, a vacuum vapor deposition method, or other PVD methods.

Referring to the diagram, in the method for producing a photocatalyst material of the present invention using a reducing agent, a raw photocatalyst material is obtained in the raw photocatalyst material producing step P1, and in the base-metal supporting step P9, the fine particles of the base metal or the like on the surface of the raw photocatalyst material by a sputtering method, a vacuum vapor deposition method, or other PVD methods, and a photocatalyst material supporting a base metal or the like of the present invention is produced.

As specific examples for supporting Cu on a photocatalyst material produced using the producing method of the present invention, examples of each step using the above-described wet process, PVD method and photo-precipitation method will be described. In the wet process, a conventionally developed raw photocatalyst material recorded as a columnar titanium oxide photocatalyst is dipped in an aqueous solution of copper nitrate (Cu(NO₃)₂·3H₂O), dried at 150°C for 60 minutes, heat-treated in an atmosphere at 420°C for 120 minutes, and then selectively subjected to a hydrogen reducing treatment to produce a Cu-supporting columnar titanium oxide photocatalyst. Comparing with the columnar titanium oxide photocatalyst, which is the starting material, this exhibits about twice decomposition performance, and in addition, characteristic odor produced during the photocatalytic reaction is reduced.

On the other hand, in the PVD method, fine Cu particles are supported on a columnar titanium oxide photocatalyst by a sputtering method, and a Cu-supporting columnar titanium oxide photocatalyst is produced. Comparing with the columnar titanium oxide photocatalyst, which is the starting material, this exhibits about twice decomposition performance, and in addition, characteristic odor produced during the photocatalytic reaction is reduced.

An example of the methods for producing a photocatalyst material having a columnar structure on which Cu is supported using a photo-precipitation method will be described in detail.

### <1> Production of conventionally developed raw photocatalyst material recorded as columnar titanium oxide photocatalyst, namely production of crystal nucleus and columnar hollow titanium oxide photocatalyst.

A non-alkali glass or a silica-fiber filter (manufactured by Advantech Co. Ltd., QR-100) subjected to cleaning treatment using a neutral detergent, iso-propyl alcohol and pure water is used as a substrate, and on the surface of the substrate, a titanium oxide crystal having a columnar hollow structure on the crystal nucleus is formed by putting the crystal nucleus into a sol solution consisting of an organic metal compound, or by applying the sol solution to the crystal nucleus, and curing and heat-treating it, to make them a titanium oxide substrate and a titanium oxide filter, respectively. The catalyst-supporting area is 75 mm × 75 mm, and the titanium oxide supporting quantity is about 0.1 g. In the following examples, the same catalyst-supporting area and the titanium oxide supporting quantity are also used.

As an example of the methods for preparing s sol solution consisting of an organic metal compound, 35 g of butanediol, 0.4 g of water and 0.5 g of nitric acid are mixed to be a solution, 5 g of titanium tetraisopropoxide (TTIP) is dropped into the solution while stirring, and the solution is stirred for 4 hours at normal temperature to obtain the sol solution.

In thus obtained sol solution, a crystal nuclei prepared using various preparation method are dipped, or the sol solution obtained as described above is applied to the crystal nuclei prepared on a titanium oxide substrate or a titanium oxide filter using various preparation method, and the sol solution is dried, cured and heat-treated to form a titanium oxide crystal of the crystal nuclei. Curing is performed in a dryer under the conditions of an attained temperature of 150°C to 200°C and a retention time of 2 hours. The heat treatment is performed in an electric furnace under the conditions of elevated temperature 10°C/min, an attained temperature of 500°C to 600°C and a retention time of 2 hours.

Among the preparations of crystal nuclei using various preparation methods, a method for preparing a titanium oxide crystal using an SPD method follows the method described in an unpublished patent application (Japanese Patent Application No. 2001-181969 and the like) by the present inventors, and the titanium oxide crystal is prepared as follows. Specifically, the material solution is prepared by adding acetyl acetone (referred to as Hacac) to TTIP in a mol ratio (Hacac/TTIP) of 1.0, diluting this with isopropyl alcohol and stirring. The film forming using a spray pyrolysis (SPD) apparatus (manufactured by Make, YKII) is performed under the conditions of a pressure of 0.3 MPa, a spray quantity of 1.0 ml/sec, a spray time of 0.5 ml/spray, a substrate temperature of 450°C, and number of spray of 200. According to the surface observation using a scanning electron microscope (SEM), the titanium oxide crystal film produced using the SPD method is a titanium oxide crystal film composed of crystals having the sizes of 30 nm to 100 nm, and can be obtained as a raw photocatalyst material of the present invention.

### <2> Base-metal supporting <1> Material solution of base metal to be supported

When copper nitrate trihydrate is used as a Cu compound, it is diluted with water to prepare an aqueous solution of a concentration of 2 × 10⁻⁵ mol/l. Further, 10% by weight of ethanol is added thereto to form a Cu material solution. The aqueous solution of copper nitrate can be used from the concentration of about 2 × 10⁻⁶ mol/l or higher. As the concentration of the solution is lower, the particle diameter of the metal supported on the surface of the photocatalyst material can be reduced, and the improvement of the photocatalytic performance can be expected.

### <3> Base-metal supporting <2> Photo-precipitation step

A titanium oxide filter or the like is dipped in a Cu material solution, and ultraviolet rays are radiated thereon. By this operation, Cu ions in the Cu material solution are reduced due to the reducing function of the photocatalyst, and deposited on the surface of titanium oxide. Besides the dipping treatment, Cu can be supported by radiating ultraviolet rays after the Cu material solution is applied to the surface of titanium oxide using a spray method or the like.

### <4> Base-metal supporting <3> Drying step

After Cu is supported on the titanium oxide filter, the titanium oxide filter is washed with pure water, and the photocatalyst material is dried at 150°C for 1 hour.

By the above step, fine Cu particles are supported, and a Cu-supporting columnar titanium oxide photocatalyst can be produced. Comparing with the columnar titanium oxide photocatalyst, which is the starting material, this exhibits about twice decomposition performance, and in addition, characteristic odor produced during the photocatalytic reaction is reduced.

### Examples

The test results will be described below using examples and comparative examples; however, the present invention is not limited to the following examples.

The methods for preparing each of examples and comparative examples, and the like are collectively shown in Table 1.

**Table 1**

| | Kind of titanium oxide photocatalyst | Presence and absence of base metal supporting and method of supporting |
|---|---|---|
| Example 1 | Columnar hollow titanium oxide photocatalyst | Photo-precipitation method Immersing in Cu material solution → Black light radiation → Drying (150°C, 1 hr) |
| Example 2 | Columnar hollow titanium oxide photocatalyst | Wet process Immersing in aqueous solution of cupper nitrate → drying (150°C, 1 hr) → Heat treatment (450°C, 1 hr, in air) → Reduction treatment (450°C, 2 hr, in H₂-Ar environment) |
| Example 3 | Columnar hollow titanium oxide photocatalyst | Physical vapor deposition method Supporting Cu by sputtering method |
| Comparative Example 1 | Columnar hollow titanium oxide photocatalyst | No Cu supporting |
| Comparative Example 2 | Powdery titanium oxide photocatalyst | No Cu supporting |

### <Example 1 Cu-supporting photocatalyst material prepared by photo-precipitation method>

Using the above-described photo-precipitation method, Cu was supported on a columnar hollow titanium oxide photocatalyst material to prepare a titanium oxide filter. It was confirmed by SEM observation that fine Cu particles having particle diameters between 1 and 50 nm were supported on the surface of titanium oxide crystals in the obtained photocatalyst material.

### <Example 2 Cu-supporting photocatalyst material prepared by wet process>

Copper nitrate trihydrate (Cu (NO₃)₂·3H₂O, prepared by Wako Pure Chemical Industries, Ltd., Special Grade) was diluted with distilled water, and the concentration was adjusted to 2 × 10⁻⁵ mol/l. The titanium oxide filter was immersed in the aqueous solution of copper nitrate, and allowed it to stand for 24 hours. By this operation, Cu was adsorbed on the surface of titanium oxide until equilibrium adsorption was reached. After supporting Cu on the titanium oxide filter, it was washed with pure water. Thereafter, it was dried at 150°C for 1 hour, and subj ected to heat treatment in the air at 450°C for 2 hours. Since the surface of Cu in the state subjected to heat treatment in the air was in the oxidized state, it was reduced in a water-vapor atmosphere. The titanium oxide filter was packed in a quartz-glass tube, and was subj ected to reduction treatment using a 10-vol% hydrogen-argon mixed gas at 450°C for 2 hours. It was confirmed by SEM observation that fine Cu particles having particle diameters between 1 and 50 nm were supported on the surface of titanium oxide crystals in the obtained photocatalyst material.

### <Example 3 Cu-supporting photocatalyst material prepared by PVD method>

A sputtering method was conducted using an RF magnetron sputtering apparatus (ULVAC, Inc., SH-350EL-T06). In the film-forming chamber, a substrate supporting a titanium oxide photocatalyst of a columnar hollow structure was placed facing a Cu target. As the target, a Cu target having target purity of 99.99% or above was used. The chamber was evacuated to 10 Pausing an oil rotary pump. Thereafter, evacuation was performed using a turbo molecular pump to make the film-forming chamber have a predetermined vacuum. Then, argon gas of a purity of 99.999% or above was introduced to make the film-forming chamber have an argon atmosphere. At this time, the flow rate of the introduced gas and the opening of the main valve were adjusted to a predetermined argon gas pressure (sputtering pressure). Then, an electric power was impressed to the Cu target from a DC power source to perform Cu sputtering, and while rotating the disposed titanium oxide substrate at a rotation speed of 3 rpm to make the surface thereof support fine Cu particles.

Since the purpose is to support fine Cu particles, not to form a Cu film, a short-time treatment of 3 minutes was performed. It was confirmed by SEM observation that fine Cu particles having particle diameters between 1 and 50 nm were supported on the surface of titanium oxide crystals in the obtained photocatalyst material.

### <Comparative Example 1>

A titanium oxide substrate of a columnar hollow structure without the above-described treatment for supporting fine Cu particles was made Comparative Example 1.

### <Comparative Example 2>

A commercially available powdery photocatalyst material (produced by Nippon Aerosol Co., Ltd. , P-25) was made Comparative Example 2. According to surface observation using an SEM, this was composed of titanium oxide particles having particle diameters between about 20 and 30 nm.

### <Method for evaluating properties>

For evaluating the performance of the photocatalyst, a decomposition test for acetaldehyde, which is a harmful substance, was conducted. In the testing method, the prepared titanium oxide photocatalyst body (catalyst-supporting area: 75 mm × 75 mm, titanium oxide supporting quantity: about 0.1 g) was first charged in a 20-L glass container, and after replacing the interior of the container with artificial air, acetaldehyde gas was injected into the container so that the concentration became 20 ppm. Next, a sterilization lamp of a wavelength of 254 nm was radiated onto the titanium oxide photocatalyst body, and the time required until the acetaldehyde concentration in the container became 1 ppm or less was measured using a gas monitor. The surface observation of the prepared titanium oxide photocatalyst body was conducted using an SEM. The gas composition of the artificial air used in the measurement (prepared by Taiyo Nippon Sanso Corporation) is 78% nitrogen, 21% oxygen, 0.9% argon, 0.03% carbonic acid gas (CO, CO₂, CH₄), and moisture for the balance.

The presence or absence of characteristic odor produced during ultraviolet radiation was judged by the sensory evaluation of 5 testers. The obvious occurrence of the characteristic odor was judged as "present", no observation of the characteristic odor was judged as "absent", and the observation of the characteristic odor for some extent but not so significant as "present" was judged as "somewhat present"; and the results were collectively evaluated.

The results of property evaluation in each example and comparative example are shown in Table 2; and the results of the sensory test are shown in Table 3.

**Table 2**

| | Time of acetaldehyde decomposition (Time until 20 ppm to 1 ppm or less) | Odor produced during ultraviolet radiation |
|---|---|---|
| Example 1 | 6 min | None |
| Example 2 | 6 min | None |
| Example 3 | 8 min | None |
| Comparative Example 1 | 15 min | Yes |
| Comparative Example 2 | 28 min | Yes |

**Table 3**

| Sensory evaluation of odor produced during ultraviolet radiation | | | | | |
|---|---|---|---|---|---|
| Tester | A | B | C | D | E |
| Example 1 | Absent | Absent | Absent | Absent | Absent |
| Example 2 | Absent | Absent | Absent | Absent | Absent |
| Example 3 | Absent | Absent | Absent | Absent | Absent |
| Comparative Example 1 | Present | Present | Present | Present | Present |
| Comparative Example 2 | Present | Present | Present | Present | Present |

The following is known from the results shown in Table 2.

It was confirmed by SEM observation that an aggregate consisting of photocatalyst crystal bodies, which were columnar hollow crystals having heights between 3000 and 5000 nm and widths between 300 and 500 nm, was formed in Comparative Example 1. The time required for lowering the concentration of 20 ppm of acetaldehyde gas in a predetermined volume space to 1 ppm or less, that is the decomposition time of acetaldehyde (hereafter referred to as "decomposition time of acetaldehyde") was 15 minutes, and it was shown that the required time for decomposition was shortened to about one-second compared with the later-described Comparative Example 2, the decomposition efficiency was improved to about twice, and even in the stage wherein the fine base-metal particles supporting technique of the present invention had not applied, the decomposition performance was already sufficiently higher than the prior art, and Comparative Example 1 had highly active photocatalystic functions. When ultraviolet rays were radiated, odor characteristic to the TiO₂ photocatalyst was produced.

It was confirmed from SEM observation that a large number of titanium oxide particles having particle diameters between 20 and 30 nm were present in Comparative Example 2, which is a powdery photocatalyst material. The decomposition time of acetaldehyde was 28 minutes. When ultraviolet rays were radiated, odor characteristic to the TiO₂ photocatalyst was produced.

In contrast to Comparative Examples 1 and 2, Examples 1 to 3 are titanium oxide crystalline photocatalyst materials having columnar hollow structures, wherein fine Cu particles of particle diameters between 1 and 50 nm are supported on the surface of the titanium oxide crystalline photocatalysts having columnar hollow structures by performing a base-metal supporting treatment. The result of each example will be shown below.

Example 1 is a photocatalyst material wherein fine Cu particles are supported on a titanium oxide photocatalyst having a columnar hollow structure using a photo-precipitation method. It is predicted that the obtained photocatalyst material fine Cu particles of particle diameters between 1 and 50 nm are supported on the surface of a titanium oxide crystals having a columnar hollow structure.

The decomposition time of acetaldehyde was 6 minutes, and compared with 28 minutes of Comparative Example 2, the decomposition time couldbe shortened to one-fourth to one-fifth, the decomposition efficiency could be improved to 4 to 5 times or more, and the properties of prior art could be very greatly improved.

Also in comparison with 15 minutes of Example 1, the decomposition time could be shortened to about two-fifth, the decomposition efficiency could be improved to about 2.5 times, the properties of titanium oxide photocatalyst material having a columnar hollow structure could be significantly improved, and it was demonstrated that Example 1 is a photocatalyst material having very high decomposition performance and highly active photocatalytic functions. When ultraviolet rays were radiated, no odor characteristic to TiO₂ photocatalyst was produced.

Example 2 is a photocatalyst material wherein fine Cu particles are supported on a titanium oxide photocatalyst having a columnar hollow structure using a wet process including a reducing process. It is predicted that the obtained photocatalyst material fine Cu particles of particle diameters between 1 and 50 nm are supported on the surface of a titanium oxide crystals having a columnar hollow structure.

The decomposition time of acetaldehyde was 6 minutes, and compared with 28 minutes of Comparative Example 2, the decomposition time could be shortened to one-fourth to one-fifth, the decomposition efficiency could be improved to 4 to 5 times or more, and the properties of prior art could be very greatly improved.

Also in comparison with 15 minutes of Example 1, the decomposition time could be shortened to about two-fifth, the decomposition efficiency could be improved to about 2.5 times, the properties of titanium oxide photocatalyst material having a columnar hollow structure could be significantly improved, and it was demonstrated that Example 1 is a photocatalyst material having very high decomposition performance and highly active photocatalytic functions. When ultraviolet rays were radiated, no odor characteristic to TiO₂ photocatalyst was produced.

Example 3 is a photocatalyst material wherein fine Cu particles are supported on a titanium oxide photocatalyst having a columnar hollow structure using a sputtering method, which is one of PVD methods. It is predicted that the obtained photocatalyst material fine Cu particles of particle diameters between 1 and 50 nm are supported on the surface of a titanium oxide crystals having a columnar hollow structure.

The decomposition time of acetaldehyde was 8 minutes, and compared with 28 minutes of Comparative Example 2, the decomposition time could be shortened to one-third, the decomposition efficiency could be improved to 3 times or more, and the properties of prior art could be very greatly improved.

Also in comparison with 15 minutes of Example 1, the decomposition time could be shortened to about a half, the decomposition efficiency could be improved to about twice, the properties of titanium oxide photocatalyst material having a columnar hollow structure could be significantly improved, and it was demonstrated that Example 3 is a photocatalyst material having very high decomposition performance and highly active photocatalytic functions. When ultraviolet rays were radiated, no odor characteristic to TiO₂ photocatalyst was produced.

In Examples 1 to 3, although Cu was used as a supported base metal, it was confirmed by experiments that the high activation of photocatalytic functions could be achieved even when Fe, Ni, Zn, Co V, Zr or Mn was supported on the surface of the photocatalyst.

Although Cu wassupported using a photo-precipitation method, a wet process, and a physical vapor deposition method in Examples 1 to 3, the same effect could be obtained even when Cu was supported using other methods, such as a chemical vapor deposition method, a spray pyrolysis method, and a chemical precipitation method. This was confirmed by experiments.

The evaluation of properties was conducted using not only acetaldehyde, but also other organic compounds, such as toluene, xylene, styrene and trimethylamine, and it was confirmed that the base-metal supported photocatalyst material of the present invention had the same decomposition performance and highly active photocatalytic functions for these organic compounds equivalent to the case of acetaldehyde.

### Industrial Applicability

Since the photocatalyst material and the method for the preparation thereof according to the present invention is constituted as descried above, photocatalytic functions with extremely high activity can be achieved. Especially, according to the method for supporting a base metal, this can be realized at low costs. Furthermore, since the photocatalyst material is easy to handle without flying or dropping, it is easy to incorporate in an environmental purification device or the like, the manufacturing costs can be reduced.

In addition, the photocatalyst material according to the present invention can reduce the characteristic odor produced during ultraviolet radiation.

Moreover, since the photocatalyst material according to the present invention has significant effects in cleaning functions, antibacterial functions, deodorizing functions, antifouling functions and the like due to photocatalytic functions of extremely high activity, it can be widely applied to various air conditional machinery and equipment, such as air cleaners, deodorizing equipment and cooling and heating systems, or to environmental purification equipment, such as water-clearing machines and water quality purification equipment.

## Claims

1. A photocatalyst material supported by a photocatalyst material supporting body for constituting a photocatalyst body, **characterized in that** the particles of either one of a metal or a metallic compound are supported by said photocatalyst material.

2. A photocatalyst material supported by a photocatalyst material supporting body for constituting a photocatalyst body, **characterized in that** the particles of either one of a base metal or a base-metal compound are supported by said photocatalyst material.

3. A photocatalyst material supported by a photocatalyst material supporting body for constituting a photocatalyst body, **characterized in that** the particles of both a base metal and a base-metal compound are supported by said photocatalyst material.

4. The photocatalyst material according to claim 2 or 3,
**characterized in that** said photocatalyst is titanium oxide, and said base metal or base-metal compound is at least one of Cu, Fe, Ni, Zn, Co, V, Zr, Mn, Sn, Cr, W, Mo, Nb, Ta, or the compounds thereof.

5. The photocatalyst material according to any one of claims 2 to 4, **characterized in that** said photocatalyst material is a photocatalyst material consisting of a base portion to be fixed on the surface of the photocatalyst material supporting body or a base portion fixed on the surface of the photocatalyst material supporting body, and a columnar photocatalyst crystalline body extending from said base portion.

6. The photocatalyst material according to claim 5, **characterized in that** saidbase portion consists of crystal nuclei or the like, and the inside of said columnar photocatalyst crystalline body has a hollow columnar structure.

7. The photocatalyst material according to claim 6,
**characterized in that** a structure consisting of fine photocatalyst particles in said photocatalyst crystalline body.

8. The photocatalyst material according to any one of claims 2 to 7, **characterized in that** when acetaldehyde gas is decomposed using said photocatalyst material consisting of a supporting quantity of about 0.1 g supported on the photocatalyst material supporting body having a catalyst supporting area of 75 mm × 75 mm, the time required for reducing the acetaldehyde gas concentration in a glass container of a volume of 20 liter is 5 minutes or more and 10 minutes or less.

9. A photocatalyst body comprising a photocatalyst material supporting body, and the photocatalyst material supported on the photocatalyst material supporting body according to any of claims 2 to 8.

10. A method for producing a photocatalyst material comprising a raw photocatalyst material preparing step for obtaining a photocatalyst material that supports no base metals or no compounds thereof (hereafter referred to as "raw photocatalyst material"), and a base-metal supporting step for supporting the fine particles of a base metal or the compound thereof on the surface of the obtained raw photocatalyst material; **characterized in that** said base-metal supporting step comprises a solution treatment step for implementing treatment, such as immersing and applying, using a solution of a base-metal compound to the raw photocatalyst material; and a ultraviolet treatment step for reducing and depositing the base metal or the compound thereof on the surface of the raw photocatalyst material by radiating ultraviolet rays on the photocatalyst material treated in said solution treatment step.

11. A method for producing a photocatalyst material comprising a raw photocatalyst' material preparing step for obtaining a photocatalyst material that supports no base metals or no compounds thereof, and a base-metal supporting step for supporting the fine particles of a base metal or the compound thereof on the surface of the obtained rawphotocatalyst material; **characterized in that** said base-metal supporting step comprises a solution treatment step for implementing treatment, such as immersing and applying, using a solution of a base-metal compound to the raw photocatalyst material; a drying step for drying the photocatalyst material treated in said solution treatment step; and a heat treatment step for heat-treating the photocatalyst material treated in said drying step.

12. The method for producing a photocatalyst material according to claim 11, **characterized in** further comprising, after said heat treatment step, a reduction step for reducing fine base metal particles in an oxidized state supported on the surface of said photocatalyst material.

13. A method for producing a photocatalyst material comprising a raw photocatalyst material preparing step for obtaining a photocatalyst material that supports no base metals of no compounds thereof, and a base-metal supporting step for supporting the fine particles of a base metal or the compound thereof on the surface of the obtained rawphotocatalyst material; **characterized in that** said base-metal supporting step is a chemical vapor deposition step for supporting the fine particles of a base metal or a compound thereof on the surface of the raw photocatalyst material by a thermal CVD method, a plasma CVD method, or other chemical vapor deposition methods.

14. A method for producing a photocatalyst material comprising a raw photocatalyst material preparing step for obtaining a photocatalyst material that supports no base metals of no compounds thereof, and a base-metal supporting step for supporting the fine particles of a base metal or the compound thereof on the surface of the obtained raw photocatalyst material; **characterized in that** said base-metal supporting step is a spray pyrolysis step for pyrolyzing a solution of a base metal compound by spraying it on the surface of a heated raw photocatalyst material, and thereby the base metal or the compound thereof is supported on the surface of the raw photocatalyst material.

15. A method for producing a photocatalyst material comprising a raw photocatalyst material preparing step for obtaining a photocatalyst material that supports no base metals or no compounds thereof, and a base-metal supporting step for supporting the fine particles of a base metal or the compound thereof on the surface of the obtained raw photocatalyst material; **characterized in that** said base-metal supporting step comprises a solution treatment step for implementing treatment, such as immersing and applying, using a solution of a base-metal compound to the raw photocatalyst material; and a reducing agent adding step for depositing a base metal or the compound thereof on the surface of the raw photocatalyst material by adding a reducing agent to the photocatalyst material treated in said solution treatment step.

16. A method for producing a photocatalyst material comprising a raw photocatalyst material preparing step for obtaining a photocatalyst material that supports no base metals or no compounds thereof, and a base-metal supporting step for supporting the fine particles of a base metal or the compound thereof on the surface of the obtained rawphotocatalyst material; **characterized in that** said base-metal supporting step is a physical vapor deposition step for supporting the fine particles of a base metal or a compound thereof on the surface of the raw photocatalyst material by a sputtering method, a vacuum vapor deposition method, or other vapor deposition methods.
